# EUROPEAN PATENT APPLICATION

(11) **EP 3 903 928 A1**
(43) Date of publication of application: **03.11.2021**
(21) Application number: 19902644.4
(22) Date of filing: 26.12.2019
(51) Int. Cl.: B01J 23/63, B01D 53/94, B01J 35/04, F01N 3/10, F01N 3/28, B01J 37/02

(54) **CATALYST FOR EXHAUST GAS PURIFICATION AND EXHAUST GAS PURIFICATION METHOD**

(30) Priority: 27.12.2018 JP 2018245146
(71) Applicant: Umicore Shokubai Japan Co., Ltd., Tokoname-shi Aichi 479-0882 (JP)
(72) Inventor: AKAMATSU Ayana, Kobe-shi, Hyogo 650-0047 (JP); LIN Jianjun, Kobe-shi, Hyogo 650-0047 (JP)
(74) Representative: Banse & Steglich Patentanwälte PartmbB
(86) International application number: PCT/JP2019/051146
(87) International publication number: WO 2020/138298

(57) **Abstract**

An exhaust gas purification catalyst (C), including a three-dimensional structure (10) and a catalyst component layer (20) supported on the three-dimensional structure (10), where the average thickness of the catalyst component layer (20) is 15 µm or more to 200 µm or less, the average particle size of the catalyst component is 2 µm or more to 10 µm or less, and the catalyst component particle size variation coefficient is 10 or more and less than 50. The particle distribution of the catalyst component can be 90% or more to 99.9% or less.

## Description

### Technical Field

The present invention relates to a catalyst for purifying exhaust gas and to a method for purifying exhaust gas. More specifically, the present invention relates to a catalyst for purifying exhaust gas at low temperatures and to a method for purifying exhaust gas using the catalyst therefor.

### Background of the Invention

Exhaust gas regulations require a high level of exhaust gas treatment. There has been research in catalyst components used in catalysts for exhaust gas treatment. On the other hand, the physical properties of the catalyst component have been studied and improvements to exhaust gas purification performance by increasing the efficiency of exhaust gas diffusion into the catalyst component layers have been proposed.

For example, a catalyst has been proposed in which, in a layer of a catalyst component formed on a three-dimensional structure such as a honeycomb, the particle size of a first metal oxide that supports a catalyst metal component is made larger than the particle size of a second metal oxide that does not support a catalyst metal component, thereby allowing efficient diffusion of exhaust gas into the layer (Patent Document 1). Patent Document 1 describes that NOₓ can be purified under high load conditions, but the temperature by which the NOₓ purification rate reaches 50% is high and exhaust gas can not be sufficiently purified.

In addition, a catalyst has been proposed for treating exhaust gas by improving diffusion of exhaust gas into the catalyst layer wherein a catalyst particle size of 6 *µ* m or less is used to elongate pores and the thickness of the catalyst layer is set to 150 *µ*m or less (Patent Document 2). Patent Document 2 describes that hydrocarbons in the exhaust gas can be treated but is conditional upon exhaust gas temperature exceeding 400° C and thus is incompatible with treating exhaust gas at low temperatures.

There is a desire in the field of exhaust gas treatment to propose a technique for purifying exhaust gas at low temperatures. In particular, a catalyst that has high space velocity and that can purify exhaust gas at low temperatures is desired.

### Prior Art Documents

### Patent Documents

Patent Document 1: Japanese Unexamined Patent Application Publication No. 2017-189735
Patent Document 2: Japanese Unexamined Patent Application Publication No. 2012-240027

### Summary of the Invention

### Technical Problem

An object of the present invention is to purify exhaust gas at temperatures of 400 °C or less. In particular, when large amounts of exhaust gas pass through the catalyst, there are cases where the speed at which the exhaust gas passes through the catalyst is faster than the speed at which the exhaust gas diffuses into the catalyst layer, creating the possibility of not sufficiently purifying hydrocarbons in the exhaust gas. Therefore, a further object of the present invention is to provide a catalyst structure capable of purifying exhaust gases even when the exhaust gas space velocity is high and the exhaust gas temperature is low.

### Solution to Problem

In order to solve the issue described above, the present application provides the following means.
(1) The exhaust gas purification catalyst according to the first aspect includes a three-dimensional structure and a catalyst component layer that is supported on the three-dimensional structure, wherein the average thickness of the catalyst component layer is 15 µm or more to 200 µm or less, the average particle size of the catalyst component is 2 µm or more to 10 µm or less, and the catalyst component particle size variation coefficient is 10 or more to less than 50.
(2) Regarding the exhaust gas purification catalyst according to the aspect described above, of the number of particles of the catalyst component having a particle size in a range of 0.15 µm or more to 20 µm or less, 90% or more to 99.9% or less have a particle size in a range of 1.5 µm or more to 15 µm or less.
(3) Regarding the exhaust gas purification catalyst according to the aspect described above, the catalyst component can include a precious metal and a porous inorganic oxide.
(4) Regarding the exhaust gas purification catalyst according to the aspect described above, the catalyst component can include a precious metal, a porous inorganic oxide, and an oxygen storage material.
(5) Regarding the exhaust gas purification catalyst according to the aspect described above, the catalyst component can include a precious metal, a porous inorganic oxide, an oxygen storage material, and at least one type selected from a group consisting of magnesium and an alkaline earth metal.
(6) Regarding the exhaust gas purification catalyst according to the aspect described above, for each 1 liter of the three-dimensional structure, the supported amount of the precious metal can be 0.01 g or more to 30 g or less, and the supported amount of the porous inorganic oxide can be 20 g or more to 400 g or less.
(7) Regarding the exhaust gas purification catalyst according to the aspect described above, for each 1 liter of the three-dimensional structure, the supported amount of precious metal can be 0.01 g or more to 30 g or less, the supported amount of the porous inorganic oxide can be 20 g or more to 400 g or less, and the supported amount of the oxygen storage material can be 2 g or more to 300 g or less.
(8) Regarding the exhaust gas purification catalyst according to the aspect described above, for each 1 liter of the three-dimensional structure, the supported amount of the precious metal can be 0.01 g or more to 30 g or less, the supported amount of the porous inorganic oxide can be 20 g or more to 400 g or less, the supported amount of the oxygen storage material can be 2 g or more to 300 g or less, and the supported amount of at least one type selected from a group consisting of magnesium and an alkaline earth metal can be 1 g or more to 50 g or less.
(9) The exhaust gas purification method according to the second aspect purifies exhaust gas using the exhaust gas purification catalyst according to the aspect described above.
(10) The exhaust gas purification method according to the aspect described above can use the exhaust gas purification catalyst to process exhaust gas at a space velocity (SV) of 50, 000 h⁻¹ or more to 250, 000 h⁻¹ or less. Advantageous Effects of the Invention

The exhaust gas purification catalyst of the present invention is a catalyst obtained by supporting a catalyst component having an average particle size in a specific range on a honeycomb, which is a three-dimensional structure, where in any HC (hydrocarbons), CO (carbon monoxide), and NOₓ (nitrogen oxide) in the exhaust gas are quickly diffused in the catalyst component layers, and the CO, HC, and NOₓ (hereinafter CO, HC, and NOₓ are referred to as "C0 and the like") are treated efficiently, even at low exhaust gas temperatures.

In addition, the exhaust gas purification method of the present invention can efficiently purify exhaust gases at low temperatures. In particular, in conventional catalysts, when the volume of exhaust gas that passes through the catalyst per unit time (space velocity, or SV) is large relative to the unit catalyst volume, the speed at which CO and the like in the exhaust gas pass over the catalyst surface is significantly faster than the speed at which they diffuse into the catalyst component layer, and the catalyst component layer cannot sufficiently treat the CO and the like. However, the physical properties of the catalyst components of the present invention enable the exhaust gas to be treated sufficiently at low temperatures, even when the space velocity is large (high SV).

### Brief Description of Drawings

FIG. 1 is a cross-sectional schematic diagram of an exhaust gas purification catalyst C according to example 1 of the present invention.
FIG. 2 is a diagram of the catalyst cut in a cross-section perpendicular to the exhaust gas flow, and one of the channels in the cross-section is illustrated.

### EMBODIMENTS OF THE INVENTION

The present invention is an exhaust gas purification catalyst and an exhaust gas purification method using the catalyst therefor. The catalyst of the present invention is an exhaust gas purification catalyst including (1) three-dimensional structure and a catalyst component layer that is supported on the three-dimensional structure, where the average thickness of the catalyst component layer is 15 µm or more to 200 µm or less, the average particle size of the catalyst component is 2 µm or more to 10 µm or less, and the catalyst component particle size variation coefficient is 10 or more to less than 50.

The present invention will be described in detail below, but the present invention is not particularly limited as long as the effect of the present invention is achieved. In addition, to facilitate an understanding of the features of the present invention, the drawings used in the following descriptions may show enlarged portions serving as the features, and the dimensional proportions of each of the components may differ from those of the actual dimensions. The materials, dimensions and the like illustrated in the following descriptions are examples. The present invention is not limited thereto, and may be implemented by making appropriate changes within a scope which does not change the gist thereof.

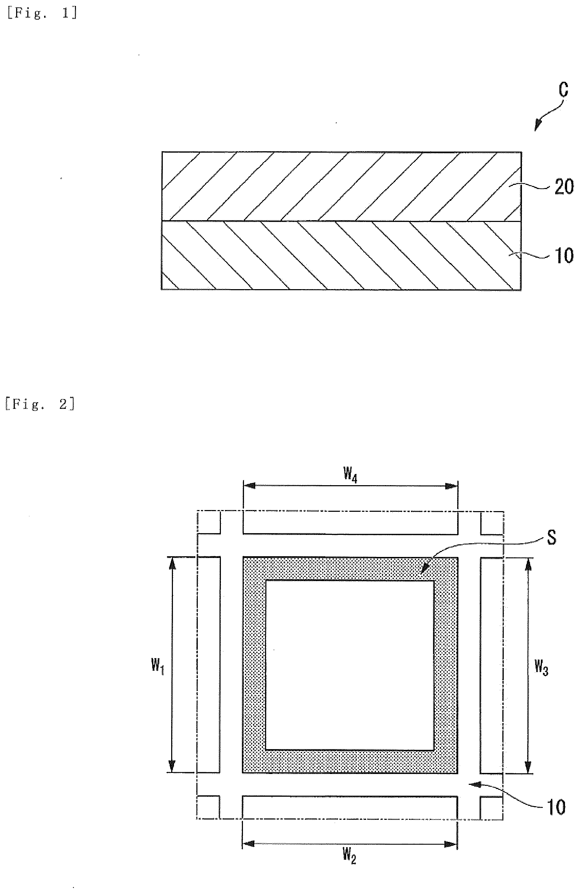

FIG. 1 illustrates a cross-sectional schematic diagram of an exhaust gas purification catalyst C according to the present invention. The exhaust gas purification catalyst C according to the present invention includes a three-dimensional structure 10 and a catalyst component layer 20 that is supported on the three-dimensional structure 10.

### Three-Dimensional Structure

The three-dimensional structure 10 used in the present invention can be a structure used in an exhaust gas purification catalyst, for example, the three-dimensional structure 10 can be a honeycomb shaped monolith carrier. With regards to the honeycomb shaped monolithic carrier, structures include open flow type honeycombs with exhaust gas channels, plug type honeycombs which have exhaust gas distribution openings and where one of the flow openings is open and the other is closed, and where the openings and closings form a checkerboard pattern on the end face and the exhaust gas passes through the pores provided on the wall of the flow openings, flat type, corrugated, and other structures. The three-dimensional structure 10 is preferably a honeycomb, and the channels or flow openings of the honeycomb can be circular, triangular, square, hexagonal, or the like. The number of channels or flow openings is preferably 100 cells or more to 1,000 cells or less per square inch (or 15.5 or more to 155 cells or less per cm²), and even more preferably 200 cells or more to 700 cells or less per square inch (or 31 or more to 109 cells or less per cm²).

The volume of the three-dimensional structure 10 should be a catalytic volume that can satisfy the space velocity described below. The cross-sectional area of the catalyst can be a wide area through which exhaust gas can pass. When the cross-sectional area is small, the linear speed of the exhaust gas (speed of the exhaust gas passing through the unit catalyst cross-sectional area) increases, such that the cross-sectional area is preferably 45 cm² or more, and more preferably 60 cm² or more. Considering ease of installation of the catalyst, the cross-sectional area is preferably 163 cm² or less, and more preferably 129 cm² or less. The length of the catalyst in the direction in which the exhaust gas passes is preferably, for example, 4.5 cm or more to 17 cm or less, and more preferably 5 cm or more to 15 cm or less. At lengths in this range, the contact time between the catalyst and the exhaust gas is short, making it difficult for the catalyst of conventional technologies to sufficiently purify the exhaust gas. Therefore, the advantage of the present invention over the prior art is particularly noticeable at catalyst lengths in this range.

The material of the three-dimensional structure 10 can be ceramic, metal, cermet, or the like, and these can be appropriately changed depending on the exhaust gas conditions.

The mass of the catalyst component can be indicated by a representation based on the volume of the three-dimensional structure. That is, the mass of each component per 1 liter of the three-dimensional structure can be indicated as "g/L".

### (Catalyst Component)

The catalyst component used in the present invention is any component capable of purifying HC, CO or NOₓ contained in exhaust gas, preferably a component capable of purifying exhaust gas at low temperature. The catalyst component preferably includes a precious metal and a porous inorganic oxide or oxygen storage material, more preferably includes a precious metal, a porous inorganic oxide and an oxygen storage material, and further preferably includes at least one type selected from a group consisting of magnesium and alkaline earth metals, precious metals, porous inorganic oxides and oxygen storage material.

### (Precious Metal)

The precious metal can be a precious metal normally used in exhaust gas purification, and is preferably platinum (Pt), palladium (Pd) or rhodium (Rh). Precious metals can be used alone or can be used in combination. Depending on the purification target, the precious metal can be changed accordingly. For example, platinum or palladium and rhodium can be used when treating HC, CO and NOₓ, particularly effective are palladium and rhodium. Platinum and/or palladium can also be used for the treatment of HC or CO.

The supported amount of the precious metals can be appropriately changed depending on the concentration of the exhaust gas flow rate per unit volume of catalyst (SV (h⁻¹)) and CO in the exhaust gas.

The supported amount of the precious metal is preferably 0.01 g or more to 30 g or less in terms of metal per 1 liter of the three-dimensional structure. The supported amount varies depending on the precious metal used. For example, when platinum, palladium, and rhodium are used, the supported amount is as follows.

When palladium is used, the amount of palladium supported per 1 liter of the three-dimensional structure can be 0.1 g or more to 30 g or less, preferably 0.5 g or more to 27 g or less, and even more preferably 0.5 g or more to 25 g or less. A supported amount of palladium of 0.1 g/L or more is suitable because CO can be sufficiently oxidized, and 30 g/L or less is suitable because it ensure a large surface area of palladium oxide.

When rhodium is used, the amount of rhodium supported per 1 liter of the three-dimensional structure can be 0.01 g or more to 8 g or less, preferably 0.1 g or more to 5 g or less, and even more preferably 0.5 g or more to 3 g or less. A supported amount of rhodium of 0.01 g/L is suitable because NOₓ can be sufficiently reduced, and 8 g/L or less is suitable because rhodium is highly dispersed and NOₓ can be reduced efficiently.

When platinum is used, the amount of platinum supported per 1 liter of the three-dimensional structure can be 0.1 g or more to 5 g or less and is preferably 0.3 g or more to 3 g or less. A supported amount of platinum of 0.1 g/L is suitable for efficiently oxidizing hydrocarbons and the like, and 5 g/L or less is suitable for efficiently purifying exhaust gas while avoiding an agglomeration of platinum.

### (Porous Inorganic Oxide)

The porous inorganic oxide can be a porous inorganic oxide typically used in exhaust gas purification, and is preferably alumina (Al₂O₃), zirconia (ZrO₂), titania (TiO₂), such as *γ*, *δ*, *θ*, and the like, and are mixtures or composite oxides thereof.Considering effective utilization of the catalyst components and durability, the porous inorganic material is preferably an oxide which is porous and has a large specific surface area not only when the exhaust gas is at a low temperature but also when the exhaust gas is at a high temperature,.

When measuring the specific surface area with BET using nitrogen gas, the specific surface area of the porous inorganic oxide should be 50 m²/g or more to 500 m²/g or less and is preferably 70 m²/g or more to 400 m²/g or less. A specific surface area of 50 m²/g or more is suitable because the precious metal or oxygen storage material can be efficiency dispersed, and 500 m²/g or less is suitable because this gives the porous inorganic oxide a high heat resistance.

The supported amount of the porous inorganic oxide can be any amount normally used for an exhaust gas purification catalyst, and is preferably 20 g/L or more to 400 g/L or less and even more preferably 30 g/L or more to 300 g/L or less. A supported amount of 20 g/L or more is suitable because the precious metal or oxygen storage material can be sufficiently dispersed, and the exhaust gas can be efficiently purified, and 400 g/L or less is suitable because this does not increase the back pressure when exhaust gas passes through the catalyst, which puts a smaller load on the engine.

### (Oxygen storage material)

The oxygen storage material has the function of absorbing, adsorbing, and releasing oxygen in the exhaust gas. The oxygen storage material can be any oxygen storage material that is normally used for exhaust gas purification. Specifically, a rare earth oxide is preferable, and is more preferably cerium oxide (CeO₂). For the purpose of improving heat resistance, improving specific surface area, and the like, a composite oxide can be formed by mixing aluminum oxide (Al₂O₃), zirconium oxide (ZrO₂), and an oxygen storage material, and the composite oxide can be used as an oxygen storage material.

The supported amount of the oxygen storage material can be any amount normally used for an exhaust gas purification catalyst and is preferably 2 g/L or more to 300 g/L or less, and even more preferably 30 g/L or more to 300 g/L or less. A supported amount of 2 g/L or more is suitable because the oxygen in the exhaust gas can be sufficiently absorbed and released, enhancing catalytic performance, and 300 g/L or less is suitable because contact between the precious metal and the exhaust gas is not inhibited.

### (Magnesium and Alkaline Earth Metal)

As at least one type selected from the group consisting of magnesium and alkaline earth metals (hereinafter, also abbreviated as "alkaline earth metals or the like"), one that is normally used in exhaust gas cleaning can be used. These elements can be included in oxides or other compounds in use. These can be selected appropriately according to the purification target, the purification temperature, and poisoning elements of the exhaust gas. These elements can be used alone or in combination. Specifically, the element can be magnesium, calcium, strontium, and/or barium, and is preferably barium.

The amount of at least one type selected from the group consisting of magnesium and alkaline earth metals can be any amount normally used in an exhaust gas purification catalyst. For example, the supported amount of magnesium and/or an alkaline earth metal can be 1 g/L or more to 50 g/L or less and is preferably 2 g/L or more to 40 g/L or less, on an oxide equivalent basis (each metal is equivalent to the corresponding MgO, CaO, SrO and BaO). A supported amount of 1 g/L or more is suitable because the NOₓ adsorption capacity of the alkaline earth metal can be sufficiently demonstrated, and a supported amount of 50 g/L or less is suitable because the strength of the catalyst component layer can be kept high.

### (Other components)

The catalyst component can include other components depending on the purification target. For example, when purifying NOₓ, a zeolite that can absorb NOₓ can be included, and a perovskite can be included to improve the oxidation performance of HC or CO.

Furthermore, the catalyst component can include an inorganic binder for the purpose of preventing the catalyst component layer 20 from separating from the three-dimensional structure 10. For example, boehmite, silica gel, zirconia gel, and the like can be used as an inorganic binder. The supported amount of the inorganic binder can be any amount such that the average particle size and particle size variation coefficient used in the present invention do not exceed the ranges specified by the present invention.

### (Average Thickness)

The exhaust gas purification catalyst according to the present invention has a catalyst component layer 20 with an average thickness of 15 µm or more to 200 µm or less. The "average thickness" is a value determined by the following procedure.
(1) Cut the catalyst vertically at a position 10 mm from the upstream end face relative to the flow of exhaust gas.
(2) The area (S) of the catalyst component supported on the three-dimensional structure is measured using an optical microscope.
(3) The length (W) of the portion of the three-dimensional structure carrying the catalyst component is measured using an optical microscope.
(4) Average thickness = S/W

In the following, based on FIG. 2, the thickness of the catalytic component layer is calculated using a case where the cut channel surfaces are rectangles as an example, such that:
Thickness of the catalyst component layer = S/(W₁ + W₂ + W₃ + W₄). Note that the same method can be used for triangular, hexagonal and circular cut channel surfaces .

When calculating the average thickness according to the present invention, the average thickness of the catalyst component layer is obtained by averaging 15 measurements of the cross-sectional channels.

The average thickness is 15 µm or more to 200 µm or less, is preferably 18 µm or more to 180 µm or less, more preferably 20 µm or more to 170 µm or less, even more preferably 23 µm or more to 100 µm or less, and most preferably 25 µm or more to 50 µm or less. An average thickness of 15 µm or more allows for HC and the like in the exhaust gas to be sufficiently diffused into the catalyst component layer, resulting in high catalytic activity. An average thickness of 200 µm or less allows the majority of the exhaust gas to diffuse into the catalyst component layer 20. As a result, the purification efficiency per unit of thickness of the catalyst component can be kept high.

### (Average Particle Size and Particle Distribution)

The average particle size of the catalyst components for the exhaust gas purification catalyst according to the present invention is 2 µm or more to 10 µm or less. Note that in the present specification, "average particle size" means a particle diameter of d50 (median diameter) measured by a laser diffraction/scattering particle size distribution analyzer. For example, the catalyst component is stripped from the exhaust gas purification catalyst, added to pure water, and ultrasonically treated for 2 minutes, and then transferred to a measurement cell of a laser diffraction/scattering particle size distribution analyzer, and the average particle size and particle distribution are measured. Furthermore, when the catalyst component contains a water-soluble component, a nonaqueous solvent can be used as the dispersion medium. Alternatively, a dry laser diffraction/scattering particle size distribution analyzer can be used. Note that when applying the slurry to the three-dimensional structure, the average particle size and the particle distribution can be obtained by measuring the particles of the catalyst component contained in the slurry used for application. When applied multiple times, each of the components to be applied can be mixed in an amount depending on the amount of application, and the average particle size and the particle distribution can be measured. After obtaining the average particle size of the particles, the standard deviation of the particles is calculated.

The average particle size of the catalyst component is 2 µm or more to 10 µm or less, preferably 4 µm or more to 8 µm or less, more preferably 4.5 µm or more to 8 µm or less, and most preferably 5 µm or more to less than 8 µm.

The particle distribution of the catalyst component is preferably 90% or more to 99.9% or less, more preferably 95% or more to 99.9% or less, and most preferably 98% or more to 99.9% or less. In the present specification, "particle distribution" refers to the ratio (percentage) of particles (number of particles) of catalyst components with a particle size in the range of 1.5 µm or more to 15 µm or less to particles (number of particles) of catalyst components with a particle size in the range of 0.15 µm or more to 20 µm or less.

A particle distribution of 90% or more to 99.9% or less enables the catalyst component layer to have high durability, and the catalyst component layer can be formed into which HC and the like in the exhaust gas can easily diffuse.

### (Particle Size Variation Coefficient)

The exhaust gas purification catalyst according to the present invention has a catalyst component particle size variation coefficient of 10 or more to less than 50. Regarding the present specification, the particle size variation coefficient means the standard deviation (σ) of the particle size divided by the average particle size (d50) and multiplied by 100. In other words, in the present specification, the particle size variation coefficient is "(σ/d50) x 100" .

The catalyst component particle size variation coefficient is preferably 10 or more to less than 50, more preferably 20 or more to 48 or less, and most preferably 25 or more to 45 or less. A variation coefficient of 10 or more to less than 50 enables the catalyst component layer to have high durability and for HC and the like contained in the exhaust gas to easily diffuse into the catalyst component layer.

### (Particle Size Variation Coefficient Calculation Method)

A method of preparing an exhaust gas purification catalyst and the method of obtaining the "particle size variation coefficient" according to the present invention is explained. The following methods are exemplary methods and the present invention is not limited to thereto as long as the effects of the present invention are produced. Note that the particle size variation coefficient can be adjusted by measuring the particles of the catalyst component when being applied to the three-dimensional structure. When applying the catalyst component, multiple times, each component to be applied is mixed in an amount corresponding to the coating amount, and the particle size variation coefficient is measured, thus allowing the particle size variation coefficient to be adjusted.
(1) The solid components of the porous inorganic oxides, oxygen storage materials, alkaline earth metals, and the like are mixed and selected as appropriate so that the average particle size, particle size distribution, and particle size variation coefficient of the entire mixture are within the ranges specified by the present invention. The resulting mixture is then mixed with an aqueous solution containing a precious metal and an aqueous medium (including an inorganic binder if necessary), to obtain a slurry (particle blend method). The slurry is applied to the three-dimensional structure 10. A catalyst component layer 20 is obtained by drying the applied slurry.
(2) Aqueous media are added to the porous inorganic oxides, oxygen storage materials, alkaline earth metals, and the like, which are then wet milled. Thereafter, excess components in the milled catalyst component, such as smaller or larger particles, are removed using a filter and the like to obtain a slurry adjusted to the ranges for particle distribution, average particle size, and particle size variation coefficient specified by the present invention (particle separation method). The catalyst component layer 20 is obtained by adding an aqueous solution containing a precious metal to the slurry, applying the slurry to the three-dimensional structure 10, and drying the slurry.
(3) The porous inorganic oxides, oxygen storage materials, alkaline earth metals, and the like are separately added to aqueous media, each of which are wet milled to the particle size specified by the present invention, each producing a slurry. The obtained slurries are then mixed with an aqueous solution containing a precious metal to obtain a slurry with the particle distribution and particle size variation coefficient as specified by the present invention (slurry blending method). The mixed slurry is applied to the three-dimensional structure 10. A catalyst component layer 20 is obtained by drying the applied slurry.

Method for Preparing the Exhaust Gas Purification Catalyst A preparation method of the exhaust gas purification catalyst of the present invention is illustrated by way of example, but is not limited to the methods given below as long as the method produces the effect of the present invention.
(1) A precious metal containing aqueous solution, porous inorganic oxides, oxygen storage materials, alkaline earth materials, and the like (or in some cases aqueous solutions containing alkaline earth metals and the like), are mixed or wet milled to form a slurry. After adjusting the average particle size, the particle distribution, and the particle size variation coefficient of the resulting slurry, the slurry is applied to the three-dimensional structure 10, which is then dried and/or calcined, thus preparing the catalyst. Note that a method of improving the accuracy of catalyst preparation is to measure the average thickness of the catalyst component layer of the catalyst obtained in the method as described above, then to collect the catalyst component to calculate the average particle size, particle distribution, and particle size variation coefficient. Adjusting the slurry described above based on the obtained values will allow for a more desirable slurry to be obtained. This method can also be used for the preparation of (2) and (3) below.
(2) After wet milling or dry milling of porous inorganic oxides and/or oxygen storage materials, the average particle size, particle distribution, and the particle size variation coefficient are adjusted, and suitable aqueous media are added to form a slurry. The resulting slurry is applied to the three-dimensional structure 10, which is then dried and calcined. The resulting three-dimensional structure 10 is immersed in an aqueous solution containing an alkaline earth metal and the like and/or an aqueous solution containing a precious metal, then further dried and/or calcined to prepare the catalyst.
(3) A mixture of milled porous inorganic oxides and/or oxygen storage materials supporting precious metals, in some cases milled porous inorganic oxides and/or oxygen storage materials not supporting precious metals, and alkaline earth metals and the like are mixed, the average particle size, particle distribution, and particle size variation coefficient are adjusted to form a slurry. The slurry is applied to the three-dimensional structure 10, which is then dried and/or calcined to prepare the catalyst.

Note that the temperature of the drying and calcining should be a temperature at which the porous inorganic oxides and the like which are applied to the three-dimensional structure 10 maintain the particle size range and particle size variation coefficient of the present invention, for example, preferably drying at 50 °C or more to less than 200 °C and calcining at 200 °C or more to 600 °C or less.

### (Exhaust Gas)

The exhaust gas purification method according to the present invention is an exhaust gas purification method using the exhaust gas purification catalyst according to the present invention. The exhaust gas to which the catalyst of the present invention is applied can be any exhaust gas that produces the effect of the present invention, but is preferably an exhaust gas containing HC, CO, or NOₓ.

For example, the concentration of CO contained in the exhaust gas is preferably 10,000 ppm or more to 70,000 ppm or less, the concentration of HC is preferably 5,000 ppm or more to 20,000 ppm or less, and the concentration of NOₓ is preferably 1,000 ppm or more to 5,000 ppm or less.

The space velocity SV of the exhaust gas is preferably 50, 000 h⁻¹ or more to 250, 000 h⁻¹ or less, and more preferably 100, 000 h⁻¹ or more to 200, 000 h⁻¹ or less. This is because when the space velocity is low, the advantages of the catalyst of the present invention are difficult to exhibit when compared to conventional catalysts, and the advantages of the present invention become more pronounced with a higher space velocity.

While the catalyst can be used when the exhaust gas temperature is as low as 100 °C, the exhaust gas temperature is preferably 200 °C or more. In addition, the exhaust gas temperature is preferably 600 °C or less, and even more preferably 400 °C or less.

### EXAMPLES

The present invention is described below in detail using examples and comparative examples, but the present invention is not limited to the examples, provided that the effects of the present invention are produced. Note that the average thickness of the catalyst component layer was measured using a Keyence Japan VHX-6000 microscope.

### Example 1

Palladium (an aqueous solution containing palladium salt) as a precious metal was supported on *γ*-alumina as a porous inorganic oxide, to obtain palladium-loaded γ-alumina with 1.7 mass% of palladium. A composite oxide of cerium and zirconium was used as the oxygen storage material, and 1.7 mass% of palladium was supported on the composite oxide to prepare a palladium supporting composite oxide of cerium and zirconium.

The palladium supporting γ-alumina, the palladium supporting composite oxide of cerium and zirconium, and barium sulfate as an alkaline earth metal were mixed in an aqueous medium to obtain a slurry (particle blend method).

The three-dimensional structure was a honeycomb with a cross-sectional area of 51.66 square inches (333.29 cm²), a length of 4.13 inches (10.5 cm) in the gas flow direction, and 600 cells of channels per square inch (93 cells per cm²). The slurry was brought into contact with the honeycomb, after which the excess slurry was removed, and the structure was then dried at 150 °C for 1 hour and calcined at 550 °C for 3 hours, to obtain the catalyst of example 1.

The catalyst had 59 g/L of *γ*-alumina supporting 1.7 mass% of palladium, 59 g/L of a composite oxide of cerium and zirconium supporting 1.7 mass% of palladium, and 3 g/L of barium sulfate (BaO equivalent) applied to the honeycomb, where the average thickness of the catalyst component layer was 28 µm, the average particle size of the catalyst was 5.7 µm, the particle distribution was 99.9%, and the catalyst component particle size variation coefficient was 38.

### Comparative Example 1

1.7 mass% of palladium (using the same palladium source as in example 1) as a precious metal was supported on γ-alumina as a porous inorganic oxide, to obtain palladium supporting *γ*-alumina with 1.7 mass% of palladium. A composite oxide of cerium and zirconium supporting 1.7 mass% of palladium was separately prepared as an oxygen storage material.

The *γ*-alumina supporting 1.7 mass% of palladium, the composite oxide of cerium and zirconium supporting 1.7 mass% of palladium as the oxygen storage material, and barium sulfate as the alkaline earth metal were added to an aqueous medium, which was then wet milled for 8 hours using a commercially available ball mill, to obtain a slurry (this slurry was obtained by a wet milling method that is commonly used, and is unadjusted for average particle size, particle distribution, and particle size variation coefficient).

The three-dimensional structure was a honeycomb with a cross-sectional area of 51.66 square inches (333.29 cm²), a length of 4.13 inches (10.5 cm), and 600 cells of channels per square inch (93 cells per cm²). The slurry was brought into contact with the honeycomb, after which the excess slurry was removed, and the structure was then dried at 150 °C for 1 hour and calcined at 550 °C for 3 hours, to obtain the catalyst of comparative example 1.

The catalyst had 59 g/L of *γ*-alumina supporting 1.7 mass% of palladium, 59 g/L of a composite oxide of cerium and zirconium supporting 1.7 mass% of palladium, and 3 g/L of barium sulfate (BaO equivalent) applied to the honeycomb, where the average thickness of the catalyst component layer was 13 µm, the average particle size of the catalyst was 4.4 µm, the particle distribution was 83%, and the catalyst component particle size variation coefficient was 64.

### (Evaluation)

The catalysts obtained in the example and comparative example were installed downstream of an evaluation gas, and the exhaust gas used as the evaluation gas was circulated at a space velocity of 180,000 h⁻¹. The temperature of the exhaust gas was increased from room temperature at a rate of 10 °C per minute, and the temperature at which 50% of carbon monoxide (CO), hydrocarbons (HC), and nitric oxide (NO) contained in the exhaust gas were each converted was measured. The temperatures at which 50% of each component was converted are shown in Table 1 below as CO (T50), HC (T50), and NO (T50), respectively (each (T50) is also referred to as the "light-off temperature" ). The evaluation gas contained 0.9 volume% of CO, 1,700 volume ppm of HC, 1,300 volume ppm of NO, with the remainder being water vapor, oxygen, and mostly nitrogen gas.

**[Table 1]**

| Catalyst | Co (T50) °C | HC (T50) °C | NOₓ (T50) °C |
|---|---|---|---|
| Example 1 | 304 | 305 | 303 |
| Comparative Example 1 | 311 | 312 | 309 |

Even when the space velocity, which represents the relationship between the exhaust gas and the catalyst, is high, the catalyst of example 1 has lower (T50) temperatures at which 50% of each component was converted compared to Comparative Example 1. That is, it can be seen that the catalyst according to the present invention can sufficiently purify each of the components even when the exhaust gas temperature is low.

### Industrial Applicability

The present invention can be used as a catalyst for purifying exhaust gas emitted from an internal combustion engine, and the exhaust gas can be purified using the catalyst. The internal combustion engine can be any gasoline engine or diesel engine, and can preferably be used as an internal combustion engine for an automobile. Description of Reference Numerals

C exhaust gas purification catalyst
S Area of the catalyst component
W₁, W₂, W₃, W₄: Lengths of the sides of the three-dimensional structure on which the catalyst component is supported
10: Three-dimensional structure
20: Catalyst component layer

## Claims

1. An exhaust gas purification catalyst comprising:
a three-dimensional structure and
a catalyst component layer that is supported on the three-dimensional structure, wherein
the average thickness of the catalyst component layer is 15 µm or more to 200 µm or less,
the average particle size of the catalyst component is 2 µm or more to 10 µm or less, and
the catalyst component particle size variation coefficient is 10 or more to less than 50.

2. The exhaust gas purification catalyst according to claim 1, wherein of the number of particles of the catalyst component having a particle size in a range of 0.15 µm or more to 20 µm or less, 90% or more to 99.9% or less have a particle size in a range of 1.5 µm or more to 15 µm or less.

3. The exhaust gas purification catalyst according to any one of claims 1 or 2, wherein the catalyst component includes a precious metal and a porous inorganic oxide.

4. The exhaust gas purification catalyst according to any one of claims 1 or 2, wherein the catalyst component includes a precious metal, a porous inorganic oxide, and an oxygen storage material.

5. The exhaust gas purification catalyst according to any one of claims 1 or 2, wherein the catalyst component includes a precious metal, a porous inorganic oxide, an oxygen storage material, and at least one type selected from a group consisting of magnesium and an alkaline earth metal.

6. The exhaust gas purification catalyst according any one of the claims 3 to 5, wherein for each 1 liter of the three-dimensional structure, the supported amount of the precious metal is 0.01 g or more to 30 g or less, and the supported amount of the porous inorganic oxide is 20 g or more to 400 g or less.

7. The exhaust gas purification catalyst according to any one of the claims 4 or 5, wherein for each 1 liter of the three-dimensional structure, the supported amount of precious metal is 0.01 g or more to 30 g or less, the supported amount of the porous inorganic oxide is 20 g or more to 400 g or less, and the supported amount of the oxygen storage material is 2 g or more to 300 g or less.

8. The exhaust gas purification catalyst according to claim 5, wherein for each 1 liter of the three-dimensional structure, the supported amount of precious metal is 0.01 g or more to 30 g or less, the supported amount of the porous inorganic oxide is 20 g or more to 400 g or less, the supported amount of the oxygen storage material is 2 g or more to 300 g or less, and the supported amount of at least one type selected from a group consisting of magnesium and an alkaline earth metal is 1 g or more to 50 g or less.

9. An exhaust gas purification method using the exhaust gas purification catalyst described in any one of claims 1 to 8.

10. The exhaust gas purification method according to claim 9, wherein the exhaust gas purification catalyst processes exhaust gas at a space velocity (SV) of 50, 000 h⁻¹ or more to 250, 000 h⁻¹.
